# EUROPÄISCHE PATENTANMELDUNG

(11) **EP 2 500 844 A2**
(43) Veröffentlichungstag der Anmeldung: **19.09.2012**
(21) Anmeldenummer: 12001780.1
(22) Anmeldetag: 15.03.2012
(51) Int. Cl.: G06K 19/07, H01L 41/04, H01L 41/113, H04R 17/00

(54) **Portabler Datenträger mit piezo-elektrischem Nanogenerator**

(30) Priorität: 18.03.2011 DE 102011014411
(71) Anmelder: Giesecke & Devrient GmbH, 81677 München (DE)
(72) Erfinder: Helleberg, Henrik, 81929 München (DE)

(57) **Zusammenfassung**

Die Erfindung betrifft einen portablen Datenträger (1) umfassend zumindest einen ersten elektro-mechanischen Konverter (3), der vorzugsweise als Nanogenerator ausgebildet ist und auf dem piezo-elektrischen Effekt beruhend elektrische Versorgungsenergie bereitstellt.

## Beschreibung

Die vorliegende Erfindung betrifft einen portablen Datenträger, insbesondere einen portablen Datenträger, mit einer Recheneinheit zur Erzeugung von Rechenergebnissen sowie ein geeignetes Verfahren zu dessen Betrieb.

Portable Datenträger im Sinne der vorliegenden Schrift sind Datenträger wie Chipkarten, Kreditkarten, Ausweise, Reisepässe, SIM-Karten, Datenspeicherkarten, etc. Solche Datenträger sind tragbar und weisen gegebenenfalls einen Kartenkörper auf oder sind kartenförmig ausgestaltet und genügen häufig bestimmten Formatvorgaben wie dem ID-1- oder dem ID-0-Format. Es ist bekannt in oder auf solchen portablen Datenträgern elektrische Verbraucher wie Recheneinheiten, Steuereinheiten oder Ausgabeelemente, beispielsweise Anzeigeelemente, wie Displays, oder Antennen für kontaktlose Schnittstellen oder Kontakte für kontaktbehaftete Schnittstellen zusammen mit einer geeigneten Ansteuereinheit vorzusehen. Damit können solche portablen Datenträger verschiedene Aufgaben erfüllen und zu verschiedenen Zwecken eingesetzt werden.

Ein solcher elektrischer Verbraucher benötigt eine Energiequelle, die den Verbraucher mit elektrischer Energie versorgt und zu diesem Zweck beispielsweise eine Versorgungsspannung liefert. Dazu ist es bekannt, portable Datenträger mit elektrischen Verbrauchern, insbesondere Chipkarten mit Anzeigeelement, mit einer Batterie auszustatten. Solche Batterien müssen jedoch zu den Vorgaben des jeweiligen portablen Datenträgers kompatibel sein. Im Fall eines kartenförmigen Datenträgers beispielsweise im ID-1-Format, muss die Batterie sowohl eine entsprechend geringe Dicke als auch eine entsprechende Verformbarkeit bzw. Biegsamkeit aufweisen, damit der Datenträger den einzuhaltenden Formatvorgaben und mechanischen Vorgaben genügt. Dies schränkt die Auswahl der möglichen Batterien und Batterietypen in solchen portablen Datenträgern erheblich ein und erhöht die Herstellungskosten.

Beim Einsatz von Batterien in portablen Datenträgern stellt sich weiterhin das Problem, dass die in den portablen Datenträger integrierte Batterie typischerweise nicht ausgetauscht werden kann, so dass, wenn die Batterie leer ist, der portable Datenträger komplett ersetzt werden muss. Somit stellt sich das Problem von Garantieansprüchen, da sich die Batterie sowohl durch unsachgemäße Benutzung wie auch durch Produktionsfehler entladen kann und dies im Nachhinein nicht mehr feststellbar ist. Zur Lösung dieses Problems ist es bekannt, zu Kontrollzwecken in dem portablen Datenträger eine zweite Batterie vorzusehen und anhand dessen Ladungszustands auf eine möglicherweise unsachgemäße Benutzung in der Vergangenheit zurück zu schließen. Eine solche unsachgemäße Benutzung würde beispielsweise dann vorliegen, wenn der portable Datenträger einer niedrigen Temperatur, beispielsweise -30°C, ausgesetzt wurde. In diesem Falle wären beide Batterien, nämlich sowohl die Batterie zur Versorgung der elektrischen Verbraucher als auch die zu Kontrollzwecken eingebaute zweite Batterie entladen. Führt dagegen ein Produktionsfehler beispielsweise zu einem erhöhten Stromverbrauch eines elektrischen Verbrauchers auf dem portablen Datenträger, so wäre nur die Batterie zur Versorgung dieses Verbrauchers entladen. Dabei stellt die zu Kontrollzwecken zusätzlich vorgesehene zweite Batterie ein zusätzliches Bauteil dar, welches die Herstellungskosten für derartige portable Datenträger erhöht. In jedem Fall ist die Lebenszeit von portablen Datenträgern mit Batterie auf die Laufzeit der Batterie begrenzt.

Desweiteren enthalten derartige Batterien häufig giftige oder umweltschädliche Substanzen, wie beispielsweise Schwermetalle, was zum einen die Entsorgung von verbrauchten portablen Datenträgern verkompliziert und verteuert und bei unsachgemäßer Entsorgung, beispielsweise durch einen Endverbraucher, eine Umweltgefahr darstellt.

Alternativ ist es bekannt, portable Datenträger für eine Versorgung mit elektrischer Energie aus einem externen elektro-magnetischen Feld auszulegen. Dies kann beispielsweise ein RFID (Radio Frequency Identification)-oder ein NFC (Near Field Communication)-Feld sein, wie dies bei dem kürzlich von der Bundesdruckerei vorgestellten Reisepass mit OLED-Anzeigeelement der Fall ist. Dies hat allerdings den Nachteil, dass zur Aktivierung und Versorgung der elektrischen Verbraucher das vorgesehene externe elektro-magnetische Feld zur Verfügung gestellt werden muss. Entsprechend ist eine Überprüfung eines solchen Reisepasses mit OLED-Anzeigeelement nur mit einem geeigneten Lesegerät, welches das notwendige elektro-magnetische Feld zur Verfügung stellt, möglich, was eine einfache und unkomplizierte Überprüfung des Reisepasses ohne technische Hilfsmittel verhindert.

Aufgabe der vorliegenden Erfindung ist es daher, einen portablen Datenträger anzugeben, welcher eine Alternative zu den bekannten Möglichkeiten zur Versorgung elektrischer Verbraucher mit elektrischer Energie bietet und die damit verbundenen Nachteile überwindet.

Diese Aufgabe wird durch einen portablen Datenträger gemäß dem Hauptanspruch gelöst.

Die Erfindung beruht auf der Erkenntnis, dass portable Datenträger deformierbar, insbesondere elastisch verformbar, sind und somit die Oberfläche des portablen Datenträgers durch äußeren Druck verformt werden kann, was beispielsweise zu einer Änderung des Volumens des portablen Datenträgers führt. Meist ist der portable Datenträger auch flach ausgestaltet und dann entsprechend biegsam. Dies ist insbesondere bei kartenförmigen Datenträgern bzw. deren Kartenkörper der Fall. Teilweise wird bereits durch die Formatvorgaben eine gewisse Verformbarkeit und/oder Biegsamkeit des Datenträgers gefordert. Entsprechend kann beispielsweise die Dicke eines solchen flachen portablen Datenträgers durch Ausüben einer externen Kraft oder eines externen Druckes verändert werden oder der gesamte portable Datenträger gebogen werden.

Im Sinne der vorliegenden Erfindung wird unter einer Verformung des portablen Datenträgers eine von einer Ruhelage verschiedene Form des portablen Datenträgers verstanden, beispielsweise eine verformte Form. Die Ruhelage des portablen Datenträgers ist dabei die Form, die der Datenträger ohne Einwirkung äußerer Kräfte annimmt. In der Ruhelage ist ein portabler Datenträger üblicherweise eben. Unter einer Formveränderung wird eine Änderung der Form des portablen Datenträgers von einer ersten Verformung zu einer zweiten Verformung, beispielsweise die Änderung der Form von der Ruhelage des portablen Datenträgers zu einer bestimmten Verformung, verstanden.

Erfindungsgemäß umfasst der portable Datenträger zumindest einen ersten elektro-mechanischen Konverter. Im Sinne der vorliegenden Erfindung wird unter einem elektro-mechanischen Konverter ein Bauteil verstanden, das bei einer Formveränderung elektrische Energie erzeugt. Solche elektro-mechanischen Konverter können prinzipiell auf dem bekannten piezo-elektrischen Effekt beruhen und monokristallin, polykristallin oder auf Polymerbasis aufgebaut sein. Entsprechend ist der elektro-mechanische Konverter derart in, auf oder an dem portablen Datenträger oder dessen Trägerkörper angebracht und/ oder mit diesem fest verbunden, dass eine Formveränderung des portablen Datenträgers eine Formveränderung des elektro-mechanischen Konverters und eine entsprechende Erzeugung elektrischer Energie bewirkt. Dies wird im Folgenden als Betätigen des elektro-mechanischen Konverters bezeichnet, was durch Biegen bzw. Hin- und Herbiegen des portablen Datenträgers oder durch Ausüben eines Drucks oder einer Kraft auf den beispielsweise auf einer Auflage liegenden portablen Datenträger geschehen kann.

Die von dem elektro-mechanischen Konverter bei Betätigung erzeugte elektrische Energie dient vorzugsweise zur Versorgung von elektrischen Verbrauchern mit elektrischer Energie und gegebenenfalls zur Erzeugung einer geeigneten Versorgungsspannung. Somit kann auf den Einsatz von Batterien in dem portablen Datenträger verzichtet werden. Durch den Verzicht auf Batterien sinken die Herstellungskosten, während der erfindungsgemäße portable Datenträger während eines langen, prinzipiell unbegrenzten Zeitraums betrieben werden kann. Ebenso ist der Betrieb des erfindungsgemäßen portablen Datenträgers unabhängig von dem Vorhandensein externer elektro-magnetischer Felder, womit ein Betrieb des portablen Datenträgers ohne besondere technische Vorkehrungen, wie spezielle Lesegeräte, möglich ist.

Der elektro-mechanische Konverter kann wie oben beschrieben auf dem piezo-elektrischen Effekt beruhen. In einer vorteilhaften Ausgestaltung des erfindungsgemäßen portablen Datenträgers ist der erste elektro-mechanische Konverter jedoch als sogenannter Nanogenerator (auch als Nanoenergiegenerator bezeichnet) ausgebildet. Solche Nanogeneratoren sind beispielsweise aus dem Fachartikel "Flexible High-Output Nanogenerator Based on Lateral ZnO Nanowire Array" von Guang Zhu et al., Nano Lett. 2010, 10, 3151 - 3155 bekannt. Solche Nanogeneratoren beruhen auf Nanodrähten, die beispielsweise aus ZnO oder anderweitigen geeigneten Materialien aufgebaut sind. Sie weisen gegenüber elektro-mechanischen Konvertern, die auf dem piezo-elektrischen Effekt beruhen, bei einer vorgegebenen Formveränderung eine höhere Ausbeute an elektrischer Energie auf. Durch eine Formveränderung, wie sie beispielsweise durch einen Benutzer des portablen Datenträgers leicht erzeugt werden kann, ist es möglich, beispielsweise Ausgabeelemente wie Anzeigeelemente oder Rechen- und Steuereinheiten wie Prozessoren oder Chips zu betreiben, das heißt ausreichend mit elektrischer Energie zu versorgen. Solche Prozessoren oder Chips weisen häufig bereits einen geringen Energiebedarf auf, um eine übermäßige Wärmeentwicklung zu vermeiden, was deren Versorgung durch elektro-mechanische Konverter, wie Nanogeneratoren, begünstigt. Eine geeignete Formveränderung kann beispielsweise durch Biegen gegebenenfalls durch Hin- und Herbiegen des portablen Datenträgers oder durch Ausüben eines Drucks auf den portablen Datenträger erzeugt werden.

Da die Menge der bei einer gegebenen Formveränderung eines elektro-mechanischen Konverters erzeugten Energie mit dessen Größe korreliert ist, hängt zumindest bei gegebener Dicke eines beispielsweise flachen elektro-mechanischen Konverters, wie er typischerweise in den flächig ausgedehnten und gegebenenfalls flachen, beispielsweise kartenförmigen portablen Datenträgern verwendet wird, die Energieausbeute von der flächigen Ausdehnung des elektro-mechanischen Konverters ab. Um eine hohe Energieausbeute zu erzielen, weist der erste elektro-mechanische Konverter eine große flächige Ausdehnung innerhalb des Datenträgers auf. Die flächige Ausdehnung des ersten elektro-mechanischen Konverters beträgt vorzugsweise mehr als 30%, 50 %, 70%, 80 %, 90 % oder 95% der Fläche des portablen Datenträgers bzw. dessen Kartenkörpers.

Es kann vorgesehen sein, die durch das oben genannte Betätigen des ersten elektro-mechanischen Konverters erzeugte Versorgungsenergie in einem elektrischen Zwischenspeicher, wie einem Kondensator - der dann einen Stützkondensator bildet - oder einem Akkumulator zwischenzuspeichern. Dadurch kann der portable Datenträger prinzipiell auch nach dem Beenden des Betätigens des ersten elektro-mechanischen Konverters für einen gewissen Zeitraum weiter betrieben werden. Um dem Benutzer anzuzeigen, wie lange ein solcher Betrieb ohne Betätigung des ersten elektro-mechanischen Konverters noch möglich ist, können für einen Benutzer geeignete Anzeigeelemente auf dem portablen Datenträger vorgesehen werden. Derartige Anzeigeelemente führen jedoch zu einem erhöhten Energieverbrauch und somit zu einer zusätzlich verkürzten Betriebszeit nach Betätigung des ersten elektro-mechanischen Konverters. Derartige Anzeigeelemente erhöhen zudem die Anzahl der Bauteile in dem Datenträger und somit die Herstellungskosten und das Ausfallrisiko.

Um den portablen Datenträger konzeptionell einfach zu halten und die Anzahl der in dem portablen Datenträger verwendeten Bauteile gering zu halten, wird in einer vorteilhaften Ausgestaltung des erfindungsgemäßen portablen Datenträgers auf eine Zwischenspeicherung von elektrischer Energie, insbesondere von Versorgungsenergie, verzichtet. Entsprechend ist auf dem portablen Datenträger kein Speicher wie Kondensator, Stützkondensator oder Akkumulator zur Zwischenspeicherung von elektrischer Versorgungsenergie, das heißt von elektrischer Energie zur Versorgung elektrischer Verbraucher des portablen Datenträgers, vorgesehen. Durch die somit reduzierte Anzahl von Bauteilen in dem portablen Datenträger sinken die Herstellungskosten und auch die Fehleranfälligkeit und somit das Ausfallrisiko des portablen Datenträgers.

Selbstverständlich können innerhalb des portablen Datenträgers Kondensatoren für andere Zwecke, insbesondere für Schaltkreise beispielsweise in Steuer- oder Recheneinheiten, vorhanden sein. Deren Kapazität liegt typischerweise jedoch mehrere Größenordnungen unter der Kapazität von Kondensatoren, die zur Zwischenspeicherung von Versorgungsenergie verwendet werden. Die Kapazität von Kondensatoren, die für Schaltungszwecke verwendet werden, liegt typischerweise im Nano-Farad- oder Micro-Farad-Bereich, während die Kapazität von Kondensatoren, die für die Zwischenspeicherung von Versorgungsenergie verwendet werden, typischerweise im Bereich von Milli-Farad oder Farad liegt. Die letztgenannten Kondensatoren weisen zudem häufig einen speziellen Aufbau auf, der die Produktionskosten signifikant erhöht. Solche Kondensatoren sind beispielsweise sogenannte Superkondensatoren, die unter Bezeichnungen wie Goldcap, Supercap, Boostcap oder Ultracap bekannt sind. Entsprechend weist der portable Datenträger vorzugsweise nur Kondensatoren oder sonstige kapazitive Einheiten (wie sie beispielsweise durch die Zusammenschaltung von Kondensatoren entstehen) mit Kapazitäten von weniger als 1 F, 100 mF, 10 mF, 1 mF oder 100 µF auf.

Durch den Verzicht auf einen solchen Kondensator oder sonstigen Zwischenspeicher für elektrische Versorgungsenergie ist ein Betrieb des portablen Datenträgers nur während der Betätigung des ersten elektro-mechanischen Konverters möglich. Umfasst der portable Datenträger dabei lediglich ein Anzeigeelement oder Display, wie es beispielsweise bei dem bekannten Reisepass mit OLED-Anzeigeelement der Fall ist, so beeinträchtigt der Wegfall einer Möglichkeit zur Zwischenspeicherung von Versorgungsenergie die Handhabung des portablen Datenträgers kaum, da ein Ablesen einer solchen Anzeige auch während des Betätigens des elektro-mechanischen Konverters, das heißt beispielsweise während des Biegens des portablen Datenträgers, leicht möglich ist. Ist auf dem portablen Datenträger zusätzlich oder alternativ zu dem Anzeigeelement eine Steuer- oder Recheneinheit vorgesehen, so kann auch diese lediglich während des Betätigens des ersten elektro-mechanischen Konverters betrieben werden. Können durch den plötzlichen Wegfall der elektrischen Versorgungsspannung unzulässige Zustände in einer solchen Steuer- oder Recheneinheit oder einem damit gegebenenfalls verbundenen nicht-volatilen Speicher entstehen, so werden die entsprechenden Rechen- und gegebenenfalls Speicherschritte transaktionssicher ausgeführt. Vorzugsweise sind sämtliche Rechenschritte einer solchen Steuer- oder Recheneinheit transaktionssicher ausgelegt.

Je nach Ausgestaltung des portablen Datenträgers kann es wünschenswert sein, bestimmte Rechenschritte der Recheneinheit nicht in jedem Falle durchzuführen oder ein bestimmtes Rechenergebnisse nicht in jedem Fall zu erzeugen, insbesondere nicht jedes Mal wenn elektrische Versorgungsenergie zur Verfügung steht. Vielmehr kann es wünschenswert sein, nur bei Vorliegen einer vorbestimmten Bedingung, beispielsweise bei Vorliegen einer expliziten Anforderung durch einen Benutzer, bestimmte Rechenschritte durchzuführen oder ein Rechenergebnis zu erzeugen. Dies ist beispielsweise bei einem portablen Datenträger zur Passwort-Erzeugung, insbesondere zur Einmalpasswort-Erzeugung, der Fall, bei dem ein neues Passwort oder Einmalpasswort nur bei Bedarf erzeugt werden soll (im Folgenden wird der Einfachheit halber nur noch von Einmalpassworten gesprochen).

Ein portabler Datenträger zur Einmalpasswort-Erzeugung umfasst ein Ausgabeelement in Form eines Anzeigeelementes, auf dem ein oder mehrere Einmalpassworte, vorzugsweise das aktuelle und gültige Einmalpasswort, angezeigt werden. Ein solcher portabler Datenträger zur Einmalpasswort-Erzeugung umfasst typischerweise auch Mittel, die einen Abgleich des erzeugten Einmalpasswortes mit einem entfernten Rechner, beispielsweise einem Server, gestatten, für den dieses Einmalpasswort gültig ist bzw. eine Autorisierung darstellt. Dies können Mittel zum Aufbau einer kontaktbehafteten oder einer kontaktlosen Datenverbindung mit dem entfernten Rechner sein. Dabei sind die Rechenschritte zur Erzeugung des Einmalpasswortes in der Recheneinheit des portablen Datenträgers mit Vorteil transaktionssicher ausgestaltet. Bei einem solchen portablen Datenträger zur Erzeugung von Einmalpassworten ist es jedoch unerwünscht, dass die Recheneinheit immer dann ein neues Einmalpasswort erzeugt, wenn ausreichend elektrische Versorgungsenergie zur Verfügung steht, denn dann würde beispielsweise bereits ein unbeabsichtigtes Betätigen des ersten elektro-mechanischen Konverters, beispielsweise durch Biegen des portablen Datenträgers in einer Tasche eines Benutzers, zur Erzeugung eines neuen Einmalpasswortes führen. Ein solcher unnötiger "Verbrauch" von Einmalpassworten ist zum einen unerwünscht und kann zum anderen - vor allem bei schneller zeitlicher Abfolge - auch zu einem ungenügenden oder fehlerhaften Abgleich zwischen dem portablen Datenträger und dem entfernten Rechner führen, wodurch das beispielsweise auf dem portablen Datenträger angezeigte Einmalpasswort keine gültige Autorisierung für den entfernten Rechner oder Server mehr darstellen würde.

Entsprechend ist auf dem portablen Datenträger vorzugsweise ein Eingabeelement vorgesehen, über das ein Benutzer die Erzeugung eines neuen Einmalpassworts anfordern kann. Dieses Eingabeelement ist im einfachsten Fall ein Schalter, beispielsweise ein Tippschalter, der in dem portablen Datenträger vorgesehen ist. Jedoch kann die Recheneinheit ein Betätigen eines solchen Schalters nur während des Betriebs, das heißt während des Betätigens des ersten elektro-mechanischen Konverters, erkennen, was die Handhabung eines solchen portablen Datenträgers wesentlich erschwert, da das Eingabeelement und der erste elektro-mechanische Konverter zugleich betätigt werden müssten.

In einer vorteilhaften Ausgestaltung eines erfindungsgemäßen portablen Datenträgers umfasst dieser daher als Eingabeelement einen zweiten elektro-mechanischen Konverter. Dieser erzeugt bei Betätigung elektrische Energie, welche ausreicht, die erfolgte Betätigung des zweiten elektro-mechanischen Konverters in dem portablen Datenträger persistent zu speichern. Vorzugsweise wird zur persistenten Speicherung der Zustand eines nicht-flüchtigen Speichers verändert, beispielsweise wird ein nicht-flüchtiges Speicherelement gesetzt oder ein nicht-flüchtiger Zähler, beispielsweise ein so genannter Knopfzähler in einem Flash-Speicher, inkrementiert.

Ein solcher zweiter elektro-mechanischer Konverter, der eingerichtet ist, den Zustand eines nicht-flüchtigen oder nicht-volatilen Speicherelements in definierter, vorbestimmter und/ oder bekannter Weise zu verändern, gestattet eine deutlich vereinfachte Handhabung des portablen Datenträgers, da eine Anforderung eines Benutzers zur Durchführung bestimmter Rechenschritte oder zur Erzeugung bestimmter Rechenergebnisse, beispielsweise zur Erzeugung eines Einmalpasswortes, nicht zeitgleich mit der Betätigung des ersten elektro-mechanischen Konverters abgegeben werden muss. Vielmehr kann eine solche Anforderung durch Betätigen des zweiten elektro-mechanischen Konverters unabhängig von und insbesondere vor dem Betätigen des ersten elektro-mechanischen Konverters signalisiert werden, so dass ein prinzipiell beliebiger Zeitraum zwischen dem Betätigen des zweiten und dem Betätigen des ersten elektro-mechanischen Konverters liegen kann. Bei einer späteren Aufnahme des Betriebs des portablen Datenträgers durch Betätigung des ersten elektro-mechanischen Konverters kann dann anhand des veränderten, nicht-flüchtigen Speicherelements erkannt werden, ob eine Anforderung zur Durchführung bestimmter Rechenschritte, beispielsweise zur Erzeugung eines Einmalpasswortes, vorliegt. Bei geeigneter Ausgestaltung und Verwendung des nicht-flüchtigen Speicherelements, beispielsweise wenn das Speicherelement gesetzt wird oder ein Zähler inkrementiert wird, führt auch ein mehrmaliges Betätigen des zweiten elektro-mechanischen Konverters nur zu einer einmaligen Ausführung bestimmter Rechenschritte, beispielsweise zur Erzeugung nur eines neuen Einmalpasswortes.

Wie beschrieben, ist der zweite elektro-mechanische Konverter so ausgestaltet, dass die bei dessen Betätigung erzeugte elektrische Energie ausreicht, um den Zustand eines nicht-flüchtigen Speichers zu verändern. Beispielsweise wird der Zustand eines Speichers auf Eins gesetzt und der Speicher ist somit "gesetzt", was vorzugsweise unabhängig von dem vorherigen Zustand erfolgt. Alternativ kann auch ein nicht-flüchtiger Zähler inkrementiert werden. Die dafür notwendige elektrische Energie ist typischerweise wesentlich geringer als die zum Betrieb der übrigen elektrischen Verbraucher des portablen Datenträgers erforderliche Energiemenge. Daher besitzt der zweite elektro-mechanische Konverter vorzugsweise eine geringere flächige Ausdehnung als der erste elektro-mechanische Konverter. Sie beträgt vorzugsweise weniger als 10%, 5%, 3%, 2%, 1%, 0,5% oder 0,1 % der Fläche des portablen Datenträgers bzw. dessen Kartenkörpers. Auch der zweite elektro-mechanische Konverter ist vorzugsweise als so genannter Nanogenerator oder Nanoenergiegenerator ausgebildet.

Wurde in einem portablen Datenträger ein Einmalpasswort oder ein sonstiges Rechenergebnis erzeugt, so wird das mit dem zweiten elektro-mechanischen Konverter verbundene nicht-flüchtige Speicherelement zurückgesetzt, indem beispielsweise dessen Zustand auf Null gesetzt wird oder ein zweiter nicht-flüchtiger Zähler mit dem Zählerstand des mit dem zweiten elektro-mechanischen Konverters verbundenen Zählers abgeglichen wird. Ein neues Einmalpasswort oder ein sonstiges Rechenergebnis wird dann erzeugt, wenn der nicht-flüchtige Speicher einen gegenüber diesem rückgesetzten Wert veränderten Zustand aufweist, das heißt wenn das nicht-flüchtige Speicherelement wieder gesetzt ist oder wenn der mit dem zweiten elektro-mechanischen Konverter verbundene Zähler einen gegenüber dem zweiten Zähler erhöhten Wert aufweist.

Vorzugsweise findet ein Überprüfen des nicht-flüchtigen Speichers auf einen veränderten Zustand zumindest jedes Mal dann statt, wenn der Betrieb der Recheneinheit aufgenommen wird, beispielsweise wenn erneut ausreichend Versorgungsenergie bereit steht, und besonders bevorzugt auch fortlaufend während des Betriebs, insbesondere so, dass ein Betätigen des zweiten elektro-mechanischen Konverters unmittelbar erkannt wird. Weist der nicht-flüchtige Speicher einen veränderten Wert auf, so wird ein neues Einmalpasswort oder sonstiges Rechenergebnis erzeugt und vorzugsweise mittels des Ausgabeelements ausgegeben und besonders bevorzugt in einem geeigneten nicht-flüchtigen Speicher abgelegt. Weist der nicht-flüchtige Speicher dagegen einen unveränderten Wert auf, so wird vorzugsweise das zuletzt erzeugte Einmalpasswort oder das zuletzt erzeugte sonstige Rechenergebnis aus einem nicht-flüchtigen Speicher ausgelesen und mittels des Ausgabe-elements ausgegeben. Dadurch kann sich ein Benutzer ein einmal erzeugtes Einmalpasswort durch erneutes Betätigen des ersten elektro-mechanischen Konverters, das heißt beispielsweise durch Biegen des portablen Datenträgers, beliebig oft anzeigen lassen. Dies ist insbesondere bei Einmalpassworten mit vielen Zeichen vorteilhaft. Ebenso wird durch ein unbeabsichtigtes Biegen des portablen Datenträgers, das heißt eine unbeabsichtigte Betätigung des ersten elektro-mechanischen Konverters, kein neues Einmalpasswort erzeugt und auch lediglich ein bereits erzeugtes und entsprechend altes Einmalpasswort angezeigt, was jedoch üblicherweise die Sicherheit nicht beeinträchtigt.

In dieser vorteilhaften Ausgestaltung führt mehrmaliges Anfordern eines neuen Einmalpasswortes durch mehrmaliges Betätigen des zweiten elektro-mechanischen Konverters nur zur Erzeugung eines einzigen neuen Einmalpassworts, wenn der Betrieb der Recheneinheit wieder aufgenommen wird. Dadurch wird die Anzahl der verwendeten bzw. "verbrauchten" Einmalpassworte minimiert. Mit anderen Worten, führt auch ein versehentlich mehrmaliges Anfordern eines neuen Einmalpasswortes vor dessen Erzeugung nicht zu einer unnötigen Erzeugung von Einmalpassworten.

Der Betrieb der oben beschriebenen bevorzugten Ausgestaltung des portablen Datenträgers wurde im Wesentlichen am Beispiel eines portablen Datenträgers zur Einmalpasswort-Erzeugung mit Anzeigeelement beschrieben. Das beschriebene Betriebsverfahren bietet sich aber für alle portablen Datenträger an, die ein Rechenergebnis erzeugen. Dabei kann anstelle des Anzeigeelements auch jedes andere geeignete Ausgabeelement vorgesehen sein, beispielsweise ein Ausgabeelement zur kontaktlosen oder kontaktbehafteten Übermittlung von Rechenergebnissen an einen geeigneten Empfänger.

In einer bevorzugten Ausgestaltung wird bei der Erzeugung des Rechenergebnisses ein Transaktionsmechanismus vorgesehen, das heißt das Rechenergebnis wird transaktionssicher erzeugt, so dass die Erzeugung fehlerhafter Rechenergebnisse vermieden wird, selbst dann, wenn die Erzeugung des Rechenergebnisses wegen fehlender Versorgungsenergie bzw. wegen eines Abfalls der Versorgungsspannung unterbrochen werden muss.

In einer vorteilhaften Ausgestaltung ist der portable Datenträger eingerichtet, bei gleichzeitiger Betätigung von erstem und zweitem elektro-mechanischen Konverter kein Rechenergebnis zu erzeugen. Einer solchen Ausgestaltung liegt der Gedanke zugrunde, dass ein gleichzeitiges Betätigen von erstem und zweitem elektro-mechanischen Konverter ein unbeabsichtigtes Betätigen des portablen Datenträgers bzw. dessen elektro-mechanischen Konverters bedeutet. Daher wird in diesem Fall bevorzugt kein Rechenergebnis, beispielsweise kein Einmalpasswort, erzeugt. Ebenso kann von einer Anzeige des zuletzt erzeugten Rechenergebnisses oder Einmalpasswortes auf dem Anzeigeelement abgesehen werden. Da bei einem derartigen unbeabsichtigten Betätigen der elektro-mechanischen Konverter des portablen Datenträgers davon auszugehen ist, dass gegebenenfalls zuvor abgegebene Anforderungen zur Erzeugung eines Rechenergebnisses oder eines neuen Einmalpasswortes nicht mehr aktuell sind, oder auch diese in Wirklichkeit unbeabsichtigt waren, wird vorzugsweise auch der mit dem zweiten elektro-mechanischen Konverter verbundene Speicher auf "unverändert" zurückgesetzt, indem beispielsweise das nicht-flüchtige Speicherelement auf "nicht gesetzt" eingestellt wird oder in dem zweiten nicht-flüchtigen Zähler der Zählerstand des mit dem zweiten elektro-mechanischen Konverters verbundenen nicht-flüchtigen Zählers eingestellt wird.

Als weitere Maßnahme gegen ein unbeabsichtigtes Betätigen des zweiten elektro-mechanischen Konverters wird dieser innerhalb des portablen Datenträgers derart örtlich angeordnet, dass der zweite elektro-mechanische Konverter teilweise oder vollständig von dem ersten elektro-mechanischen Konverter umgeben ist. Dies kann dann besonders einfach realisiert werden, wenn der zweite elektro-mechanische Konverter eine geringere flächige Ausdehnung als der erste elektro-mechanische Konverter aufweist. Ein unbeabsichtigtes Betätigen des zweiten elektro-mechanischen Konverters und somit ein unbeabsichtigtes Anfordern eines Rechenergebnisses oder eines Einmalpasswortes wird dadurch wirksam vermieden.

In einer bevorzugten Ausgestaltung des erfindungsgemäßen portablen Datenträgers ist eine Vielzahl von zweiten elektro-mechanischen Konvertern auf dem portablen Datenträger ausgebildet. Diese sind eingerichtet der Recheneinheit jeweils eine unterschiedliche Eingabeinformation zur Verfügung zu stellen. Die zweiten elektro-mechanischen Konverter bilden somit Tasten und die Vielzahl der zweiten elektro-mechanischen Konverter bilden eine Tastatur. Vorzugsweise ist die Vielzahl der zweiten elektro-mechanischen Konverter in der Form einer Tastatur, vorzugsweise in der Form einer Zifferntastatur auf dem portablen Datenträger angeordnet. Somit ist es möglich, der Recheneinheit unterschiedliche Eingabeinformationen und beispielsweise unterschiedliche Zeichen wie Ziffern oder Buchstaben zu Verfügung stellen.

Vorzugsweise ist die Recheneinheit eingerichtet, die zur Verfügung gestellte Eingabeinformation zur Erzeugung des Rechenergebnisses zu verwenden, das heißt die zur Verfügung gestellte Eingabeinformation in die Berechnung des Rechenergebnisses einfließen zu lassen. Im einfachsten Fall besteht die unterschiedliche Eingabeinformation darin, dass für die Recheneinheit erkennbar ist, welcher zweite elektro-mechanische Konverter der Vielzahl von zweiten elektro-mechanischen Konvertern betätigt wurde. Dazu kann jeder der Vielzahl von zweiten elektro-mechanischen Konvertern jeweils einem nicht-flüchtigen Speicher zugeordnet sein, welcher bei Betätigung des zugeordneten zweiten elektro-mechanischen Konverters, wie bereits oben beschrieben, verändert wird.

Vorzugsweise ist auf dem portablen Datenträger ein nicht-flüchtiger Pufferspeicher, vorzugsweise ein Ringpuffer oder ein FIFO (First In First Out)-Speicher vorgesehen, in welchem eine vorgegebene Anzahl von Eingabeinformationen der Vielzahl von zweiten elektro-mechanischen Konvertern abgelegt werden können. Stellt die Vielzahl der elektro-mechanischen Konverter beispielsweise unterschiedliche Zifferntasten dar, so können in dem nicht-flüchtigen Pufferspeicher Ziffernfolgen, die aus der vorgegebenen Anzahl von Ziffern bestehen, abgelegt werden. Statt oder zusätzlich zu den Ziffern können beliebige Zeichen vorgesehen sein. Die zum Betrieb des Ringpuffers notwendige Energie wird dabei vorzugsweise durch den betätigten Konverter der Vielzahl von zweiten elektro-mechanischen Konvertern erzeugt. Beim Betätigen des ersten elektro-mechanischen Konverters, das heißt bei Betrieb der Recheneinheit, liest die Recheneinheit die in dem nicht-flüchtigen Pufferspeicher abgespeicherten Eingabeinformationen, beispielsweise in Form einer Ziffern- oder Zeichenfolge, aus und erzeugt anhand dieser Eingabeinformation das angeforderte Rechenergebnis. Dabei kann es vorgesehen sein, dass zunächst geprüft wird, ob die in dem nicht-flüchtigen Pufferspeicher abgelegte Eingabeinformation eine gültige Eingabeinformation darstellt und nur im Fall einer gültigen Eingabeinformation das Rechenergebnis erzeugt wird, im anderen Fall jedoch kein Rechenergebnis erzeugt und gegebenenfalls ein bereits zuvor erzeugtes Rechenergebnis auf einem Anzeigeelement angezeigt wird.

Die Eingabeinformation oder die Vielzahl von Eingabeinformationen stellen dabei vorzugsweise Transaktionsdaten oder einen Teil davon dar. Beispielsweise kann anhand einer einem Benutzer zugeordneten PIN (Personal Identification Number), TAN (Transaction Number), Kontonummer oder Teilen davon ein Einmalpasswort erzeugt werden, welches eine gültige Authentifizierung auf einem entfernten Rechner oder Server gestattet. Die Eingabeninformationen können auch eine Authentifizierung des Benutzers gegenüber dem portablen Datenträger darstellen.

Die erfindungsgemäße Verwendung von wenigstens einem elektro-mechanischen Konverter in portablen Datenträgern gestattet es, auf Energiespeicher wie Kondensatoren oder Akkumulatoren zu verzichten, ohne die Handhabbarkeit solcher portablen Datenträger zu beeinträchtigen.

Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Im Einzelnen zeigen die Figuren:
- Figur 1: ein erstes Ausführungsbeispiel eines portablen Datenträgers in Draufsicht,
- Figur 2: ein zweites Ausführungsbeispiel eines portablen Datenträgers in Draufsicht, und
- Figur 3: einen Ringpuffer.

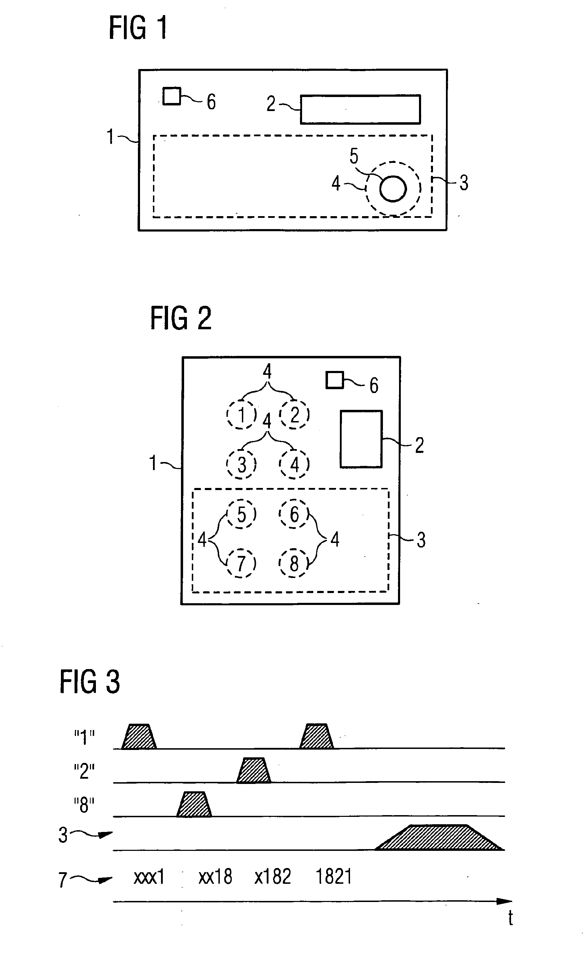

In Figur 1 ist ein portabler Datenträger in Form einer Chipkarte 1 in Draufsicht dargestellt. Die Chipkarte 1 dient zur Erzeugung eines Einmalpasswortes und umfasst ein Anzeigeelement 2, in welchem ein Einmalpasswort angezeigt werden kann. Die Chipkarte 1 umfasst weiterhin einen ersten elektro-mechanischen Konverter in Form eines ersten Nanogenerators 3. Dieser dient zur Erzeugung einer Versorgungsspannung für das Anzeigeelement 2 sowie für eine Recheneinheit 6 und eine nicht dargestellte kontaktlose Schnittstelle, über die die Recheneinheit 6 die erzeugten Einmalpassworte mit einem entfernten Rechner oder Server, für den die erzeugten Einmalpassworte eine gültige Authentifizierung darstellen, abgleichen kann. In dem dargestellten Ausführungsbeispiel ist der erste Nanogenerator 3 derart in der Chipkarte 1 angeordnet, dass durch eine Formveränderung der Chipkarte 1, beispielsweise durch ein Hin- und Herbiegen der Chipkarte 1 durch einen Benutzer, elektrische Energie erzeugt wird. Dies gestattet während einer Formveränderung der Chipkarte 1 ein Einmalpasswort in dem Anzeigeelement 2 darzustellen und gegebenenfalls ein neues Einmalpasswort zu erzeugen.

Die Chipkarte 1 umfasst weiterhin einen zweiten elektro-mechanischen Konverter in Form eines zweiten Nanogenerators 4. Dieser ist innerhalb einer kreisförmigen Aussparung innerhalb des ersten Nanogenerators 3 angeordnet und vollständig von dem ersten Nanogenerator 3 umschlossen. Damit wird ein versehentliches Betätigen des zweiten Nanogenerators 4 wirkungsvoll unterbunden. Dabei ist vorgesehen, den zweiten Nanogenerator 4 durch Druck auf die Oberfläche der Chipkarte 1 zu betätigen. Entsprechend ist in der Oberfläche der Chipkarte 1 ein Knopf 5 vorgesehen, der eine Formveränderung des darunter liegenden zweiten Nanogenerators 4 durch Ausüben eines Drucks senkrecht zur Oberfläche der Chipkarte 1 gestattet. Dabei weist der erste Nanogenerator 3 eine wesentlich größere flächige Ausdehnung als der zweite Nanogenerator 4 auf. In dem dargestellten Ausführungsbeispiel nimmt der erste Nanogenerator 3 mehr als 70% der Fläche der Chipkarte ein.

Die Recheneinheit 6 umfasst einen ersten nicht-flüchtigen Zähler und einen zweiten nicht-flüchtigen Zähler. Der zweite Nanogenerator 4 ist mit dem ersten Zähler der Recheneinheit 6 verbunden und die beim Betätigen des zweiten Nanogenerators 4 erzeugte elektrische Energie reicht aus und wird verwendet, den ersten Zähler zu inkrementieren. Durch mehrmaliges Betätigen des zweiten Nanogenerators 4 wird der erste Zähler der Recheneinheit 6 mehrmals inkrementiert. Das Inkrementieren des ersten nicht-flüchtigen Zählers der Recheneinheit 6 findet unabhängig von einem Betrieb der Recheneinheit 6 und einem Betätigen des ersten Nanogenerators 3 statt, das heißt, dass der erste Zähler genau dann inkrementiert wird wenn der zweite Nanogenerator 4 betätigt wird. Durch das Betätigen des zweiten Nanogenerators 4 wird von einem Benutzer das Erzeugen eines Einmalpasswortes angefordert.

Beim Betätigen des ersten Nanogenerators 3 wird die Recheneinheit 6 in Betrieb gesetzt. Diese prüft zunächst, ob die Erzeugung eines Einmalpasswortes angefordert wurde, indem geprüft wird, ob der erste Zähler inkrementiert wurde, was anhand eines Vergleichs des Zählerstandes des ersten nicht-flüchtigen Zählers mit dem Zählerstand des zweiten nicht-flüchtigen Zählers geschieht. Weist der erste Zähler einen höheren Wert als der zweite Zähler auf, so wurde der zweite Nanogenerator 4 betätigt und die Erzeugung eines Einmalpasswortes angefordert. In diesem Fall führt die Recheneinheit 6 die notwendigen Rechenschritte durch, welche transaktionssicher ausgestaltet sind, um unzulässige Zustände der Recheneinheit 6 durch Wegfall der Versorgungsspannung während der Erzeugung eines Einmalpasswortes und entsprechend die Erzeugung fehlerhafter Einmalpassworte zu vermeiden. Anschließend wird der zweite Zähler mit dem ersten Zähler abgeglichen und das erzeugte Einmalpasswort zum einen in einem nicht-flüchtigen Speicher hinterlegt und zum anderen in dem Anzeigeelement 2 dargestellt. Wurde dagegen der erste Zähler nicht inkrementiert und somit kein neues Einmalpasswort angefordert, wird das zuletzt erzeugte Einmalpasswort ausgelesen und erneut in dem Anzeigeelement 2 dargestellt.

In dem in Figur 1 dargestellten Ausführungsbeispiel wird der zweite Nanogenerator 4 dazu verwendet, bei der Chipkarte 1 bzw. bei deren Recheneinheit 6 die Erzeugung eines Einmalpasswortes anzufordern. Durch das Vorsehen einer Vielzahl solcher zweiter Nanogeneratoren 4 können der Recheneinheit 6 für die Erzeugung von Einmalpassworten auch Eingabeinformationen zur Verfügung gestellt werden, die eine Authentifizierung des Benutzers gegenüber der Chipkarte 1 darstellen und/ oder zur Erzeugung eines Einmalpasswortes verwendet werden. Eine solche Chipkarte 1 ist in dem in Figur 2 dargestellten zweiten Ausführungsbeispiel gezeigt.

Darin ist eine Vielzahl von zweiten Nanogeneratoren 4 nach der Art des zweiten Nanogenerators 4 aus dem ersten Ausführungsbeispiel ausgebildet. Diese sind in der in Figur 2 gezeigten Draufsicht mit den Ziffern "1" bis "8" markiert und stellen somit Tasten einer Zifferntastatur dar. Diese Vielzahl von zweiten Nanogeneratoren 4 können wiederum in Aussparungen des ersten Nanogenerators 3 (siehe Tasten "5" bis "8") oder entfernt von dem ersten Nanogenerator 3 (siehe Tasten "1" bis "4") angeordnet sein. Die Recheneinheit 6 der Chipkarte 1 umfasst in dem zweiten Ausführungsbeispiel einen in Figur 3 schematisch dargestellten Ringpuffer 7, in welchem eine Folge von vier Zahlenwerten hinterlegt werden kann. Wird beispielsweise die Taste "1", das heißt der mit der Ziffer "1" beschriftete Nanogenerator, betätigt, so wird die dabei erzeugte elektrische Energie dazu verwendet, in dem Ringpuffer 7 den Zahlenwert "1" zu hinterlegen und gegebenenfalls in dem Ringpuffer bereits vorhandene Zahlenwerte zu verschieben. Allgemein wird bei Betätigung eines Nanogenerators 4 der Vielzahl von zweiten Nanogeneratoren 4 der Zahlenwert der Ziffer, mit der der betätigte zweite Nanogenerator 4 beschriftet ist, in den Ringpuffer 7 eingeschrieben und bereits vorhandene Zahlenwerte weiter geschoben, wie dies in Figur 3 schematisch gezeigt ist.

In dem in Figur 3 dargestellten Ausführungsbeispiel ist der Ringpuffer 7 zur Aufnahme von vier Zahlenwerten ausgelegt. Alternativ kann er jedoch zur Aufnahme einer beliebigen Anzahl von Zahlenwerten ausgelegt werden, insbesondere auch zur Aufnahme nur eines einzigen Zahlwertes.

In dem in Figur 3 dargestellten Ausführungsbeispiel werden nacheinander die Tasten "1", "2", "8" und "1" betätigt und die entsprechenden Zahlenwerte in dem Ringpuffer 7 hinterlegt. Bei Betätigung des ersten Nanogenerators 3 wird die Recheneinheit 6 in Betrieb genommen. Diese liest den Ringpuffer 7 aus, überprüft gegebenenfalls ob die hinterlegte Zahlenwertfolge eine gültige Zahlenwertfolge darstellt und erzeugt gegebenenfalls unter Verwendung der in dem Ringpuffer 7 hinterlegten Zahlenwertfolge ein Einmalpasswort. Anschließend wird der Ringpuffer 7 gegebenenfalls gelöscht, das erzeugte Einmalpasswort in einem nicht-flüchtigen Speicher hinterlegt und das erzeugte Einmalpasswort in dem Anzeigeelement 2 angezeigt. Wird dagegen festgestellt, dass die in dem Ringpuffer 7 hinterlegte Zahlenwertfolge ungültig oder unvollständig ist, so wird kein neues Einmalpasswort erzeugt und das zuvor erzeugte Einmalpasswort wird erneut in dem Anzeigeelement 2 dargestellt.

Weiterhin können in beiden Ausführungsbeispielen verschiedene Mechanismen zur Erkennung und Behandlung einer unbeabsichtigten Betätigung der Nanogeneratoren 3, 4 der Chipkarte 1 vorgesehen sein.

## Patentansprüche

1. Portabler Datenträger (1) umfassend zumindest einen ersten elektro-mechanischen Konverter (3).

2. Portabler Datenträger (1) nach Anspruch 1, **dadurch gekennzeichnet, dass** der erste elektro-mechanische Konverter (3) zur Erzeugung von elektrischer Energie zur Versorgung von wenigstens einem elektrischen Verbraucher ausgebildet ist, der erste elektro-mechanische Konverter als Nanogenerator ausgebildet ist und/ oder der erste elektro-mechanische Konverter eine flächige Ausdehnung von mindestens 30%, 50%, 70%, 80%, 90% oder 95% der Fläche des portablen Datenträgers besitzt.

3. Portabler Datenträger (1) nach Anspruch 1 oder 2, **dadurch gekennzeichnet, dass** in dem portablen Datenträger kein elektrischer Energiespeicher, wie Kondensator oder Akkumulator, zur Zwischenspeicherung von elektrischer Energie zur Versorgung eines elektrischen Verbrauchers vorgesehen ist.

4. Portabler Datenträger (1) nach einem der vorhergehenden Ansprüche, **gekennzeichnet durch** einen zweiten elektro-mechanischen Konverter (4), der eingerichtet ist, den Zustand eines nicht-flüchtigen Speichers zu verändern, insbesondere ein Speicherelement zu setzen oder einen Zähler zu inkrementieren, und vorzugsweise eine geringere flächige Ausdehnung als der erste elektro-mechanische Konverter (3) aufweist und/ oder als Nanogenerator ausgebildet ist.

5. Portabler Datenträger (1) nach Anspruch 4, **dadurch gekennzeichnet, dass** der zweite elektro-mechanische Konverter (4) von dem ersten elektro-mechanischen Konverter (3) teilweise oder vollständig umgeben ist.

6. Portabler Datenträger (1) nach Anspruch 4 oder 5, **dadurch gekennzeichnet, dass** der wenigstens eine elektrische Verbraucher eine Recheneinheit (6) zur Erzeugung von Rechenergebnissen und vorzugsweise ein Ausgabeelement (2) zur Ausgabe eines Rechenergebnisses umfasst, wobei die Recheneinheit eingerichtet ist, ein Rechenergebnis nur dann zu erzeugen wenn der nicht-flüchtige Speicher verändert ist, vorzugsweise das Rechenergebnis transaktionssicher zur erzeugen und besonders bevorzugt ein Rechenergebnis mittels des Ausgabeelements auszugeben.

7. Portabler Datenträger (1) nach Anspruch 6, **dadurch gekennzeichnet, dass** das Rechenergebnis ein Passwort, insbesondere ein Einmalpasswort, und das Ausgabeelement (2) ein Anzeigeelement ist, auf dem das Passwort angezeigt werden kann.

8. Portabler Datenträger (1) nach Anspruch 6 oder 7, **dadurch gekennzeichnet, dass** der portable Datenträger eingerichtet ist bei gleichzeitiger Betätigung von erstem elektro-mechanischen Konverter (3) und zweitem elektro-mechanischen Konverter (4) den nicht-flüchtigen Speicher nicht zu verändern und/ oder kein Rechenergebnis zu erzeugen.

9. Portabler Datenträger (1) nach einem der Ansprüche 6 bis 8, **gekennzeichnet durch** eine Vielzahl von zweiten elektro-mechanischen Konvertern (4), welche eingerichtet sind, der Recheneinheit (6) jeweils eine unterschiedliche Eingabeinformation zur Verfügung zu stellen, wobei vorzugsweise die Recheneinheit eingerichtet ist, zur Erzeugung des Rechenergebnisses die zur Verfügung gestellte Eingabeinformation zu verwenden.

10. Portabler Datenträger (1) nach Anspruch 9, **dadurch gekennzeichnet, dass** die Vielzahl von zweiten elektro-mechanischen Konvertern als Tastatur, vorzugsweise als Zifferntastatur, ausgebildet sind.

11. Portabler Datenträger (1) nach Anspruch 9 oder 10, **gekennzeichnet durch** einen nicht-flüchtigen Pufferspeicher (7), vorzugsweise einen Ringpuffer, welcher zur Speicherung von einer Eingabeinformation oder einer Vielzahl von Eingabeinformationen ausgelegt ist, wobei die Recheneinheit (6) vorzugsweise eingerichtet ist, zur Erzeugung eines Rechenergebnisses die in dem Pufferspeicher gespeicherte Eingabeinformation oder Vielzahl von Eingabeinformationen zu verwenden.

12. Portabler Datenträger (1) nach Anspruch 9, 10 oder 11, **dadurch gekennzeichnet, dass** die Eingabeinformation oder die Vielzahl von Eingabeinformationen Transaktionsdaten darstellen und vorzugsweise das Rechenergebnis ein Passwort, insbesondere ein Einmalpasswort, ist.

13. Verfahren zur Erzeugung eines Rechenergebnisses in einem portablen Datenträger (1) nach einem der Ansprüche 6 bis 12, **gekennzeichnet durch** die Schritte:
- Prüfen ob der nicht-flüchtige Speicher verändert ist,
- wenn ja, Erzeugen eines Rechenergebnisses und vorzugsweise Ausgeben des Rechenergebnisses mittels des Ausgabeelements (2),
- vorzugsweise wenn nein, Ausgeben eines bereits vorliegenden Rechenergebnisses mittels des Ausgabeelements (2), und
- besonders bevorzugt, Rücksetzen des nicht-flüchtigen Speichers.

14. Verfahren nach Anspruch 13, **dadurch gekennzeichnet; dass** das Verfahren einmalig oder fortlaufend durchgeführt wird, sobald der Betrieb der Recheneinheit aufgenommen wird.

15. Verfahren zur Erzeugung eines Passworts, insbesondere eines Einmalpassworts, umfassend ein Verfahren zur Erzeugung eines Rechenergebnisses nach Anspruch 13 oder 14, **dadurch gekennzeichnet, dass** das Rechenergebnis ein Passwort, insbesondere ein Einmalpasswort, ist und das Ausgabeelement (2) ein Anzeigeelement ist, auf dem das Passwort angezeigt wird.
